# EUROPÄISCHE PATENTANMELDUNG

(11) **EP 0 827 818 A2**
(43) Veröffentlichungstag der Anmeldung: **11.03.1998**
(21) Anmeldenummer: 97115376.2
(22) Anmeldetag: 04.09.1997
(51) Int. Cl.: B27G 13/00, B27G 13/10

(54) **Werkzeugeinheit**

(30) Priorität: 04.09.1996 DE 19635889; 04.09.1996 DE 19635903
(71) Anmelder: Schrammel, Helmut, Dipl.-Ing., 89520 Heidenheim (DE)
(72) Erfinder: Schrammel, Helmut, Dipl.-Ing., 89520 Heidenheim (DE)
(74) Vertreter: Solf, Alexander, Dr.

(57) **Zusammenfassung**

Die Erfindung betrifft eine Werkzeugeinheit mit einem Primär- (2) und Sekundärteil (3), die sich in ihren Kontaktflächen (15,16) berühren und unter Druck zusammensetzbar und verbindbar sind, wobei an den Kontaktflächen (15) des Primärteils (2) ein Positionierelement (17) ausgebildet oder befestigt und in der Kontaktfläche (16) des Sekundärteils eine korrespondierende Ausnehmung (18) eingebracht ist, wobei das Positionierelement (17) in die Positionierausnehmungn (18) formschlüssig und spielfrei eingreift.

## Beschreibung

Die Erfindung betrifft eine Werkzeugeinheit mit zumindest zwei miteinander verbindbaren Teilen.

Bei solchen Werkzeugeinheiten, wie z. B. Fräseinheiten, Messerköpfen usw., besteht das Problem, daß die einzelnen Teile in einer vorbestimmten Lage möglichst exakt zueinander angeordnet sein müssen. So werden z. B. Fräseinheiten aus einzelnen Scheiben, den Werkzeugträgern, zusammengesetzt, die während des Fräsens mit hohen Umlaufgeschwindigkeiten betrieben werden. Diese Fräseinheiten müssen daher exakt ausgewuchtet sein. Sie werden deshalb als komplette Fräseinheit ausgewuchtet. Werden solche Fräseinheiten z. B. zu Wartungszwecken zerlegt, müssen sie in exakt derselben Anordnung wieder zusammengesetzt oder neu ausgewuchtet werden. Bei herkömmlichen Fräseinheiten ist eine exakte Positionierung nicht mit der gewünschten Präzision möglich, da die Verbindungselemente in der Regel ein Spiel aufweisen.

Bei Messerköpfen sollen die Messer auf einfache Art und Weise präzise fixiert werden, um einen exakten Schnittwinkel, eine exakte Schnittiefe und Schnittbreite zu gewährleisten.

Aus der DE-OS 17 03 869 ist ein Schneidwerkzeug bekannt, das aus einem Paket von plattenförmigen Elementen besteht, die an ihren Breitseitenflächen aneinandergesetzt sind. Die plattenförmigen Elemente sind mit Vorsprüngen und Öffnungen versehen, so daß die Vorsprünge eines plattenförmigen Elements in die Öffnungen eines angrenzend angeordneten plattenförmigen Elements eingreifen. Durch diese Ineingriffnahme sind die plattenförmigen Elemente in ihrer Anordnung zueinander festgelegt. Die Vorsprünge sind einteilig an den plattenförmigen Elementen angeformt.

In der EP 0 037 691 A2 ist eine Halterung für ein Schneidmesser eines Schneidwerkzeuges beschrieben. Die Halterung weist Vorsprünge auf, die in entsprechende Ausnehmungen am Schneidmesser eingreifen. Die Vorsprünge können einteilig an den Halterungen angeformt oder als separate zylinderförmige Stifte ausgebildet sein, die mit Preßsitz in entsprechenden Bohrungen in der Halterung eingesetzt sind.

Der Erfindung liegt die Aufgabe zugrunde, eine Werkzeugeinheit mit zumindest zwei miteinander verbindbaren Teilen so weiter zu bilden, daß auf einfache Art und Weise eine exakte Positionierung erfolgt.

Die Erfindung wird durch eine Werkzeugeinheit mit den Merkmalen des Anspruchs 1 gelöst. Vorteilhafte Ausgestaltungen sind in den Unteransprüchen gekennzeichnet.

Die erfindungsgemäße Werkzeugeinheit weist zwei verbindbare Teile auf, die sich jeweils mit einer Kontaktfläche berühren. An einem der Teile, dem Primärteil, ist an der Kontaktfläche ein Positionierelement befestigt oder ausgebildet. Das Positionierelement bildet eine gegenüber der Kontaktfläche erhabene Kontur aus. Am anderen der beiden Teile, dem Sekundärteil, ist in der Kontaktfläche eine zum Positionierelement korrespondierende Positionierausnehmung eingebracht, in die das Positionierelement beim Zusammenfügen der beiden Teile formschlüssig und spielfrei eingreift.

Nach einer Weiterbildung der Erfindung ist das Positionierelement als separates Element aus relativ weichem Material einfach, kostengünstig und mit hoher Präzision, z.B. als Kunststoffspritzteil, herstellbar. Das Positionierelement kann in an sich beliebiger Weise, z.B. sehr einfach durch Kleben an der Kontaktfläche des Primärteils befestigt werden. Durch die Erfindung wird somit eine sehr einfache und kostengünstige Lösung zur Positionierung zweier Teile einer Werkzeugeinheit geschaffen.

Nach der Ausführungsform von Anspruch 4 ist es möglich, zwei miteinander zu verbindende Teile werksseitig zu justieren und auszurichten, wobei diese Einstellung durch Anordnen und Befestigen des Positionierelements in einer vorbestimmten Position auf der Kontaktfläche des Primärteils festgelegt wird. Hierdurch können Toleranzen bei der Herstellung der zu verbindenden Teile der Werkzeugeinheit korrigiert werden. Die Teile können nach der einmaligen werksseitigen Justierung vom Benutzer beliebig oft getrennt und wieder zusammengesetzt werden, wobei immer wieder die werksseitig einmal eingerichtete Anordnung beibehalten wird.

Eine dom- bzw. dachförmige Kontur des Positionierelementes mit zwei seitlich abfallenden Flanken bewirkt durch die Anlage der beiden Flanken in den entsprechend geneigten Bereichen der Positionierausnehmung eine besonders exakte und spielfreie Positionierung der beiden Teile zueinander. Es wird somit auf einfache Art und Weise eine exakte und jederzeit wiederholbare Ausrichtung der miteinander befestigbaren Teile erzielt.

Die Erfindung wird beispielhaft anhand der Zeichnungen näher erläutert. Es zeigen:
- Fig. 1: eine zweiteilige Fräseinheit,
- Fig. 2a, 2b: jeweils eine Kontaktfläche der Teile der in Fig. 1 gezeigten Fräseinheit in der Draufsicht,
- Fig. 3: den das Positionierelement aufweisenden Bereich der in Fig. 2a gezeigten Kontaktfläche,
- Fig. 4a - 4c: ein weiteres Positionierelement in der Draufsicht, Seitenansicht und Stirnansicht,
- Fig. 5a - 5c: ein Schneidmesser mit dem in Fig. 4a - 4c gezeigtem positioniermelement in der Draufsicht, Seitenansicht und Stirnansicht,
- Fig. 6a: einen Werkzeugträger im Bereich einer Spannfläche in der Seitenansicht,
- Fig. 6b: die Spannfläche aus Fig. 6a in der Draufsicht,
- Fig. 7: den in Fig. 6a gezeigten Werkzeugträger, der mit einem Messer bestückt ist, in der Seitenansicht,
- Fig. 8a - 8c: ein Messer mit einem Positionierelement in der Draufsicht, Seitenansicht und Stirnansicht.

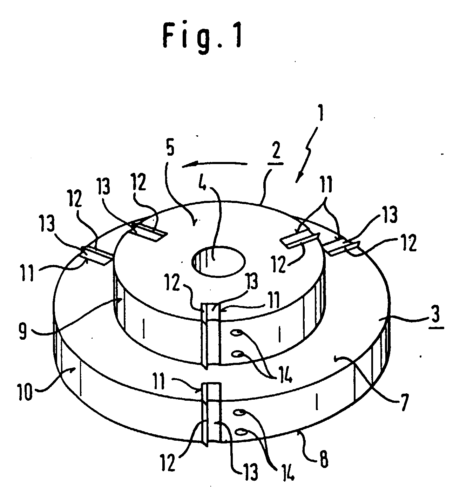

Ein erstes Ausführungsbeispiel einer erfindungsgemäßen Werkzeugeinheit ist in den Figuren 1 bis 3 dargestellt und ist eine Fräseinheit 1. Die Fräseinheit 1 weist zwei scheibenförmige Werkzeugträger 2, 3 auf, die jeweils mit einer zentralen Bohrung 4, 4a versehen sind. Die scheibenförmigen Werkzeugträger 2, 3 weisen jeweils eine obere und untere kreisförmige Flachseitenfläche 5, 6, 7, 8 und zwei Umfangsflächen 9, 10 auf. An den Umfangsbereichen der scheibenförmigen Werkzeugträger 2, 3 sind in die Umfangsflächen 9, 10 mündende nutförmige Aussparungen 11 zur Aufnahme jeweils eines Schneidmessers 12 eingebracht. Diese Schneidmesser 12 werden in an sich bekannter Weise durch Klemmkörper 13 in den Aussparungen 11 gehalten, wobei die Klemmkörper 13 durch Schrauben 14 fixiert sind.

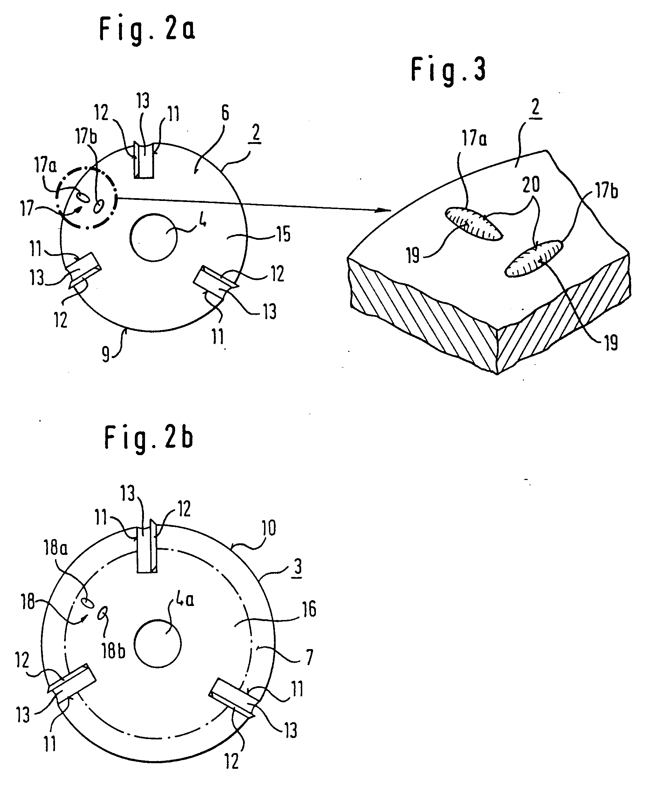

Die scheibenförmigen Werkzeugträger 2, 3 sind zu der Fräseinheit 1 zusammengesetzt, wobei der kleinere scheibenförmige Werkzeugträger 2 auf dem größeren scheibenförmigen Werkzeugträger 3 konzentrisch aufliegt, so daß die zentralen Bohrungen 4, 4a fluchten. In die Bohrung ist in an sich bekannter Art und Weise eine Buchse (nicht dargestellt) eingesetzt, die die beiden scheibenförmigen Werkzeugträger 2, 3 zusammenhält und zusammendrückt. Die untere Flachseitenfläche 6 des oberen scheibenförmigen Werkzeugträgers 2 und der entsprechende Bereich der oberen Flachseitenfläche 7 des unteren Werkzeugträgers 3 berühren sich hierbei und bilden somit Kontaktflächen 15, 16. An einer der beiden Kontaktflächen 15 ist ein Positionierelement 17 befestigt bzw. ausgebildet. Das Positionierelement bildet eine gegenüber der Kontaktfläche erhabene dom- bzw. dachförmige Kontur (Fig. 3). An der anderen Kontaktfläche 16 ist eine zum Positionierelement 17 korrespondierende Positionierausnehmung 18 eingebracht, so daß das Positionierelement 17 beim Zusammensetzen der beiden Werkzeugträger 2, 3 formschlüssig und spielfrei in die Positionierausnehmung 18 eingreift. Der obere scheibenförmige Werkzeugträger 2, an dem das Positionierelement 17 angeordnet ist, stellt somit ein Primärteil dar, das mit dem unteren scheibenförmigen Werkzeugträger 3, einem Sekundärteil, zusammensetzbar und verbindbar ist, wobei durch das Vorsehen des Positionierelementes 17 und der Positionierausnehmung 18 eine exakte Ausrichtung der beiden scheibenförmigen Werkzeugträger 2, 3 bzw. des Primärteils zum Sekundärteil, erzielt wird.

In dem in der Zeichnung dargestellten Ausführungsbeispiel besteht das Positionierelement 17 aus zwei getrennten, zigarrenförmigen bzw. etwa ellipsoidförmigen Positionierkörper 17a, 17b und die Ausnehmung 18 aus zwei entsprechenden Positionierausnehmungen 18a, 18b (Fig. 2a, 2b). Diese beiden Positionierkörper (17a, 17b) sind identisch geformt. Sie sind in die Kontaktfläche 15 des oberen scheibenförmigen Werkzeugträgers 2 eingebrachte Ausnehmungen eingeklebt. Die Tiefe und Form der Ausnehmungen ist so bemessen, daß die Positionierkörper 17a, 17b zur Hälfte über die Kontaktfläche 15 vorstehen, so daß sie auf der Kontaktfläche 15 eine domförmig gewölbte Kontur mit seitlich abfallenden Flanken 19, 20 bilden. Der radial äußere Positionierkörper 17a ist in Radialrichtung und der radial innere Positionierkörper 17b in Tangentialrichtung des scheibenförmigen Werkzeugträgers 2 angeordnet.

Die Positionierausnehmungen 18a, 18b in der Kontaktfläche 16 des unteren scheibenförmigen Werkzeugträgers 3 entsprechen den an der Kontaktfläche 15 des oberen scheibenförmigen Werkzeugträgers 2 überstehenden Bereichen der Positionierkörper 17a, 17b, so daß beim Zusammensetzen der beiden Werkzeugträger 2, 3 die Positionierkörper 17a, 17b in die entsprechenden Positionierausnehmungen 18a, 18b eingreifen. Die Werkzeugträger 2, 3 werden miteinander in an sich bekannter Weise befestigt, wobei die beiden Kontaktflächen 15, 16 zusammengedrückt werden. Hierdurch werden die Flanken 19, 20 der Positionierkörper 17a, 17b gegen die entsprechend geneigten Bereiche der Positionierausnehmungen 18a, 18b gedrückt, so daß die Positionierkörper 17a, 17b in den Positionierausnehmungen 18a, 18b exakt ausgerichtet sind. Hierdurch sind auch die scheibenförmigen Werkzeugträger 2, 3 exakt zueinander positioniert, wobei diese Positionierung beliebig oft wiederholbar ist, d. h. der Werkzeugträger kann zerlegt und wieder zusammengesetzt werden, wobei die Positionierung beibehalten wird.

Die Positionierkörper 17a, 17b können aus einem beliebigen, Werkstoff, wie z. B. Kunststoff, NE-Metalle, Stahl, Keramik, Holz, usw. ausgebildet sein. Insbesondere kann der Positionierkörper aus einem relativ weichen, duktilen Materialien, wie z.B. Kunststoffen oder NE-Metallen, ausgebildet sein. Die Positionierelemente können auch halbschalenförmig ausgebildet sein, so daß sie eine gewölbte Positionieroberfläche und eine ebenflächige Anlagefläche aufweisen, mit der sie an der Kontaktfläche befestigt werden. Solche halbschalenförmige Positionierkörper werden auf einen ebenflächigen Bereich der Kontaktfläche beispielsweise durch Kleben befestigt.

Positionierelemente mit einer ebenflächigen Anlagefläche werden bei Werkzeugeinheiten verwendet, die werksseitig ausgerichtet und vorjustiert werden. Der Ort des Positionierelement auf der Kontaktfläche des Primärteils wird vermessen und durch eine dauerhafte Verbindung, wie z.B. einer Klebeverbindung, festgelegt. Ein Benutzer kann dann die beiden Teile der Werkzeugeinheit beliebig oft trennen und wieder in der werksseitig ausgerichteten und vorjustierten Position zusammensetzen.

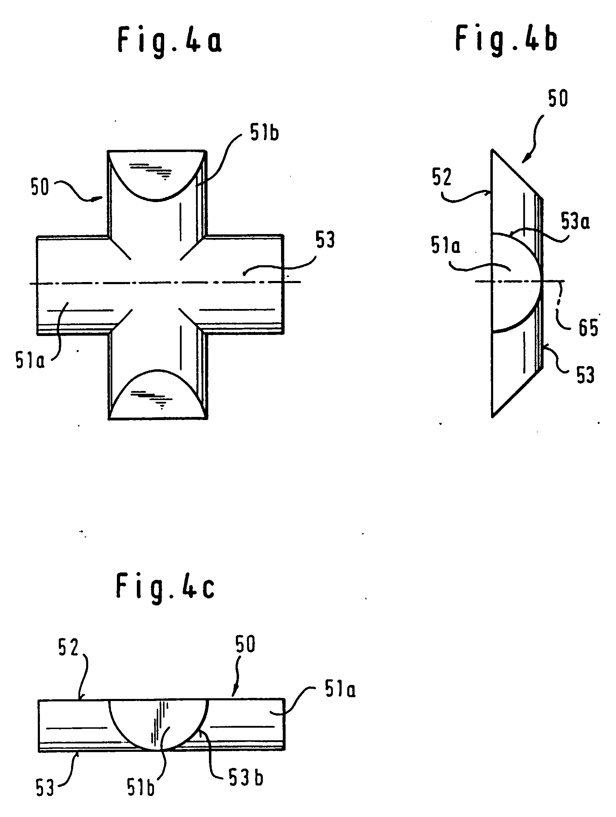

Ein weiteres Ausführungsbeispiel einer erfindungsgemäßen Werkzeugeinheit ist ein Messerkopf, der in den Figuren 4a bis 8c dargestellt ist.

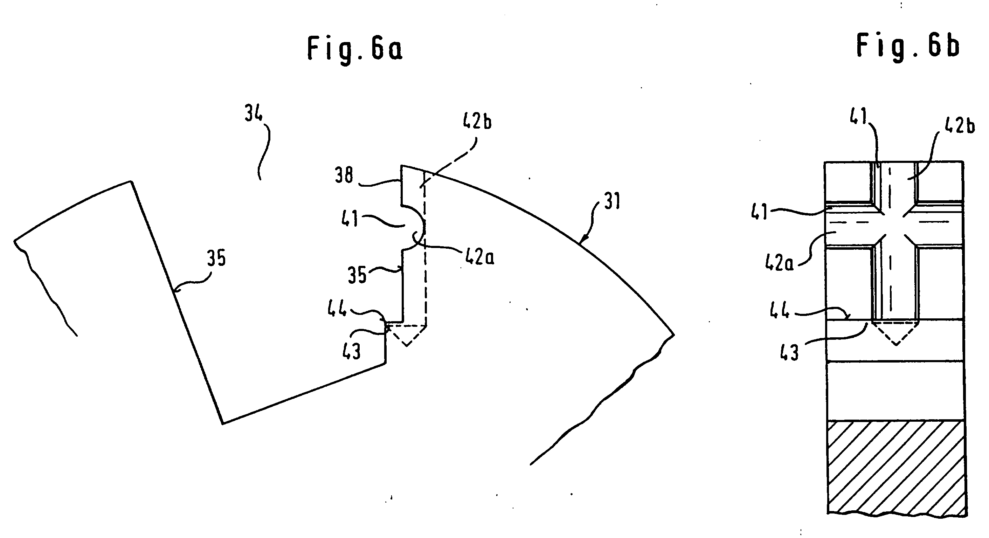

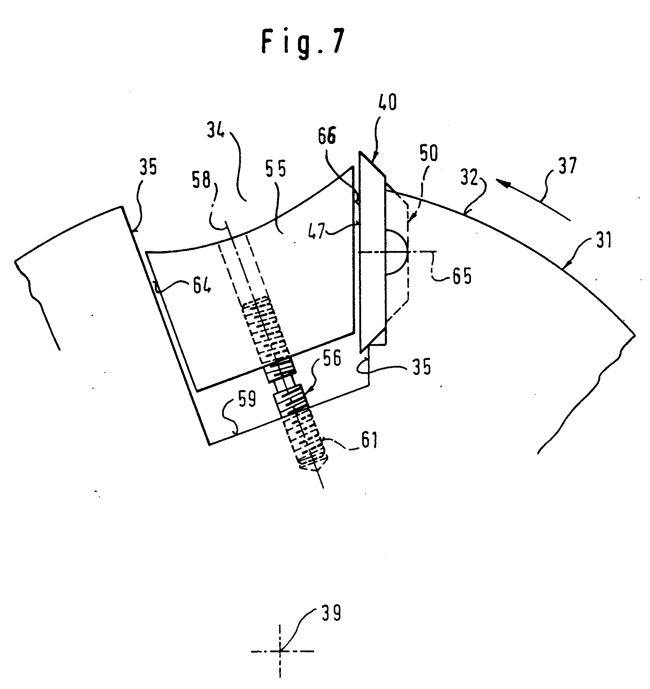

Dieser Messerkopf (Fig. 7) weist einen Werkzeugträger in der Form einer Messerscheibe 31 (Sekundärteil) mit wenigstens einer an ihrer Umfangsfläche auslaufenden, trapezförmigen Aussparung 34 auf, deren einander gegenüberliegende Seitenflächen 35 zur Umfangsflache 32 hin divergieren. Die bezüglich der Drehrichtung 37 (um eine Achse 39) der Messerscheibe 31 nacheilenden Seitenfläche 35 bildet eine Spannfläche 38 (Fig. 6a, 6b) zur Aufnahme eines Schneidmessers 40 (Primärteil).

In die Spannfläche 38 ist eine zumindest bereichsweise dom- bzw. dachförmige Positionierausnehmung 41 eingebracht, die in dem in Fig. 6a, 6b gezeigten Ausführungsbeispiel durch eine horizontale und eine vertikale Nut 42a, 42b ausgebildet ist. Die beiden Nuten 42a, 42b kreuzen sich unter einem rechten Winkel im Bereich ihrer Längsmitte, wobei die vertikale Nut 42b quermittig an der Spannfläche 38 und die horizontale Nut 42a etwa auf halber Höhe der Spannfläche 38 angeordnet ist. Die beiden Nuten 42a, 42b weisen einen halbkreisförmigen Querschnitt auf. Die Positionierausnehmung kann auch sternförmig angeordnete Nuten aufweisen, und die Form der Nuten kann auch dreieckig oder trapezförmig sein. Die Nuten können in axialer und radialer Richtung nach außen hin offen oder geschlossen sein.

Am radial inneren Bereich der Spannfläche 38 kann eine in die Aussparung 34 vorstehende Stufe 43 ausgebildet sein, die eine horizontal verlaufende Kante 44 aufweist, die als zusätzliche Positionierkante 44 für das Schneidmesser 40 dienen kann.

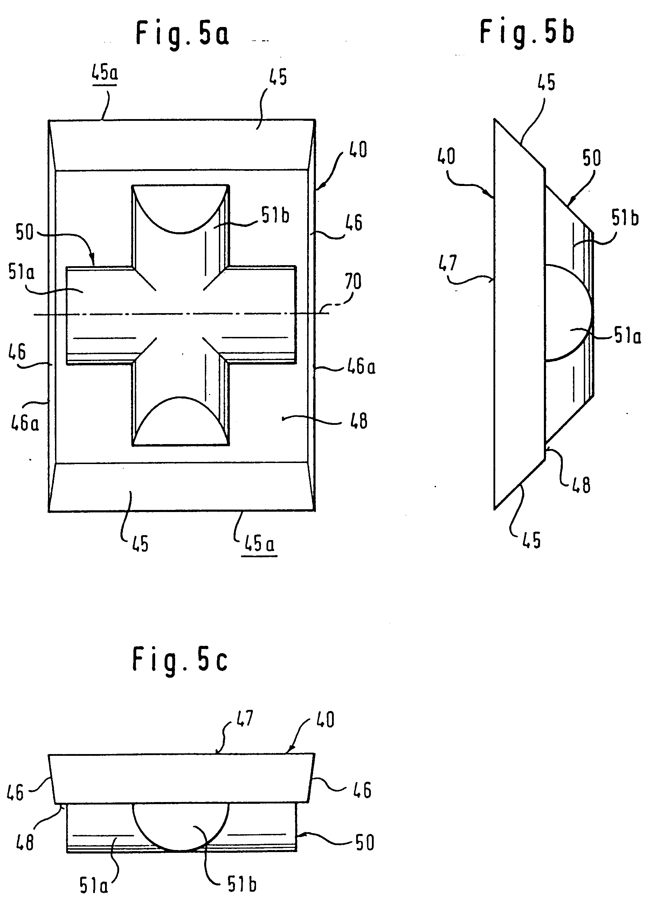

Als Schneidmesser 40 wird beispielsweise ein Wendemesser (Fig. 5a - 5c) eingesetzt werden, das in der Regel ein rechteckförmiges Plättchen aus Hartmetall mit zwei Stirnseiten 45 und zwei Längsseiten 46 ist. Die Stirnseitenkanten sind zu Hauptschneiden 45a spitz zugeschliffen und die Stirnseiten stellen jeweils einen Messerrücken 45 dar. Die Längsseitenkanten bilden Nebenschneiden 46a. Die beiden Breitseitenflächen des Schneidmessers 40 bilden eine Messerbrustfläche 47 bzw. eine Messerrückenfläche 48. An der Messerrückenfläche 48 ist ein Positionierelement 50 befestigt, das eine zu der Positionierausnehmung 41 komplementäre dom- bzw. dachförmige Form bzw. Kontur aufweist. In dem in der Zeichnung dargestellten Ausführungsbeispiel ist das Positinierelement 50 aus einem horizontalen und einem vertikalen Steg 51a, 51b ausgebildet. Die Stege 51a, 51b kreuzen sich in einem rechten Winkel. Sie weisen einen halbkreisförmigen Querschnitt (Fig. 4b, 4c) auf, so daß das Positionierelement 50 eine ebenflächige Anlagefläche 52, mit der das Positonierelement auf der Messerrückenfläche befestigt ist, und eine konturierte Positonierfläche 53 aufweist, die formschlüssig ohne Spiel in die Positionierausnehmung 41 eingreift, wenn das Schneidmesser 40 an die Spannfläche 38 angesetzt wird. Da die domförmige Kontur der Positionierfläche 53 seitlich abfallende Flanken 53a, 53b aufweist, wird das Positionierelement 50 in der entsprechenden Positionierausnehmung 41 durch die in der Ausnehmung 41 unter Druck anliegenden geneigten Flanken 53a, 53b exakt ausgerichtet. Die Enden des vertikalen Stegs 51a sind als Anlaufschrägen 53 geformt.

Das Positionierelement 50 ist beispielsweise durch eine Klebeverbindung auf der Messerrückenfläche 48 des Schneidmessers 40 befestigt. Es kann jedoch auch jede andere Verbindungsart verwendet werden, die für eine Verbindung zwischen der Anlagefläche 52 des Positionierelements 50 und der Messerrückenfläche 48 geeignet ist. Das erfindungsgemäße Positionierelement 50 kann auf das in der Regel aus Hartmetall bestehende Schneidmesser, das demensprechend schwer nachträglich bearbeitbar ist, einfach aufgebracht und positioniert werden.

Das Schneidmesser 40 wird mit einer an sich bekannten Klemmvorrichtung an der Messerscheibe 31 eingespannt. Die Klemmvorrichtung weist einen Klemmbacken 55 und eine Klemmschraube 56 auf. Der Klemmbacken ist entsprechend der voreilenden und nacheilenden Seitenfläche 35 der Aussparung 34 keilig bzw. konisch ausgebildet. Die Klemmschraube 56 erstreckt sich mit ihrer Mittelachse 58 etwa parallel zur voreilenden Seitenfläche 35 und ist in eine im Grund 59 der Aussparung 34 befindlichen Gewindebohrung 61 eingeschraubt. Die Klemmschraube 56 weist zwei hintereinander liegende Gewindeabschnitte mit einander entgegengesetzter Steigung auf. Der radial weiter innen liegende Gewindeabschnitt weist ein Rechtsgewinde auf, mit dem die Klemmschraube 56 in die Gewindebohrung 61 einfaßt. Der radial weiter außen liegende Gewindeabschnitt weist ein Linksgewinde auf, mit dem die Klemmschraube 56 in ein Innen-Linksgewinde des Klemmbackens 55 einfaßt (sogenannte Links-Rechts-Schraube). An ihrem radial äußeren Ende weist die Klemmschraube 56 ein Angriffselement für einen Schrauben-Drehschlüssel (nicht dargestellt) auf. Durch Drehen der Klemmschraube 56 in die eine oder andere Richtung läßt sich das Messer 40 in bekannter Weise schlüssig, insbesondere form- oder kraftschlüssig, an der Spannfläche 38 verspannen oder lösen, wobei die dem Messer 40 abgewandte, zur Längsachse 58 der Klemmschraube 56 parallele ebene Außenfläche 64 des Klemmbackens 55 entlang der voreilenden ebenen Seitenfläche 35 der Aussparung 34 gleitet, während sich eine ebene Klemmfläche 66 der Klemmbacke 55 auf die Messerbrust 47 zubewegt oder sich davon abhebt, so daß das Messer 40 festgeklemmt oder gelöst wird.

Diese schlüssige Befestigung zwischen den beiden Kontaktflächen, dem Messerrücken 48 und der Spannfläche 38 nimmt im Betrieb den gesamten auf das Schneidmesser 40 wirkenden Krafteintrag auf und leitet ihn an die Messerscheibe 31 ab. Mit dem Positionierelement 50 wird lediglich beim Einsetzen des Schneidmessers 40 in die Aussparung 34 sichergestellt, daß das Schneidmesser 40 bezüglich seiner radialen und axialen Position in Bezug zur Messerscheibe 31 bzw. der Spannfläche 38 exakt angeordnet ist. Es ist nicht notwendig, daß das Positionierelement weitere mechanische Funktionen übernimmt. Deshalb ist es möglich, das Positionierelement 50 aus relativ weichen, insbesondere elastisch nachgebenden Materialien, wie z. B. Kunststoff oder Holz usw. auszubilden und mit einer Verbindungsart, wie z. B. Kleben, zu befestigen, mit der die hohen für den Betrieb notwendigen Haltekräfte nicht aufgenommen werden können.

Das erfindungsgemäße Positionierelement 50 kann deshalb auch bei herkömmlichen Schneidmessern 40 eingesetzt werden, ohne daß deren Form bzw. die Werkzeuge zur Herstellung der Schneidmesser geändert werden müssen. Alleine durch Einbringen der Positionierausnehmung 41 und Vorsehen des Positionierelementes 50 an einem Schneidmesser 40 kann die Erfindung bei herkömmlichen Messerköpfen realisiert werden, wodurch die Positionierung des Schneidmessers wesentlich verbessert wird.

Bei dem in der Zeichnung dargestellten Ausführungsbeispiel legt der horizontale Steg 51a die radiale Position des Schneidmessers 40 und der vertikale Steg 51b die axiale Position des Schneidmessers fest, wobei durch die Längserstreckung der Stege 51a, 51b ein Verdrehen des Messers 40 um eine zentrale, senkrecht auf den Breitseitenflächen 47, 48 stehende Achse 65 verhindert wird, so daß auch die Drehstellung des Messers 40 eindeutig festgelegt ist.

Das Positionierelement 50 kann in der Draufsicht auch sternförmig, dreieckig oder mit einer beliebigen anderen Form ausgebildet sein. Wesentlich ist, daß durch die Form des Positionierelementes sowohl eine radiale und axiale Festlegung der Anordnung des Messers auf der Spannfläche 38 erfolgt als auch die Drehstellung des Messers eindeutig bestimmt ist. Dies kann beispielsweise durch ein in axialer und radialer Richtung ausgedehntes Positonierelement oder durch zwei auf einem Messer beabstandet angeordnete Positionierelemente erfolgen. Diese voneinander beabstandeten Positionierelemente können z. B. die Form von Kugelhalbschalen aufweisen.

Wird das Positionierelement bei Wendemessern eingesetzt, ist es symmetrisch um die Wendeachse(n) 70 des Wendemessers 40 (Fig. 5a, 5b) ausgebildet, so daß das Positionierelement zur exakten Positionierung aller Schneidkanten, wie Haupt-, Nebenschneiden usw. dient. Ferner kann das Positionierelement 50 eine für das Messer bzw. deren Eigenschaften, wie Größe, Material, usw., charakteristische Farbe aufweisen.

Die Erfindung kann in vorteilhafter Weise dazu verwendet werden, um Toleranzen bei der Herstellung der Schneidmesser auszugleichen, indem die Schneidmesser vermessen werden und danach das Positionierelement in einem vorbestimmten Abstand bzw. Anordnung zur Schneidkante auf dem Schneidmesser befestigt wird, so daß der Schneidkante am Werkzeugträger exakt festgelegt ist.

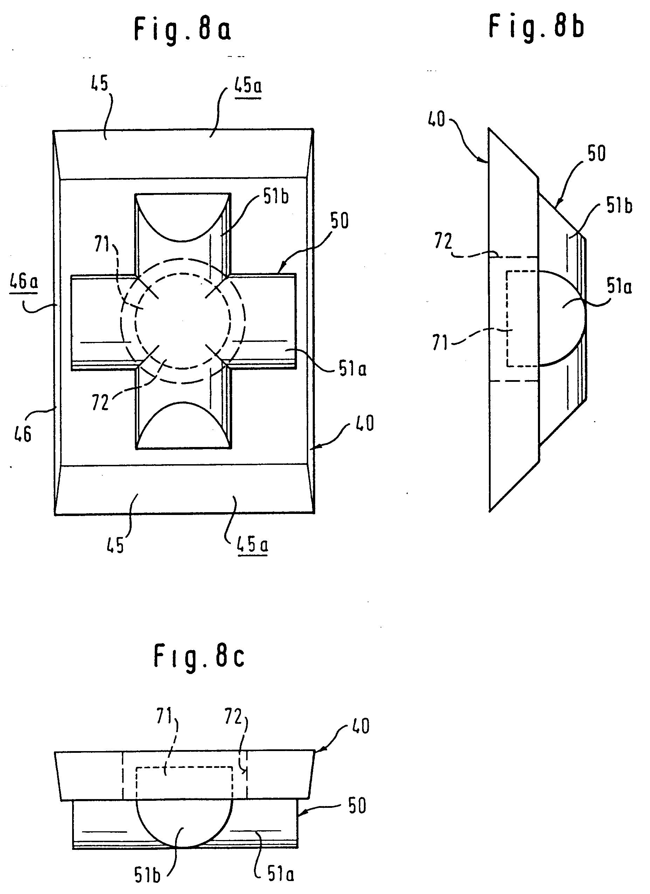

In den Figuren 8a bis 8c ist eine weitere Ausführungsform eines erfindungsgemäßen Positionierelementes 50 für Messerköpfe dargestellt. Dieses Positionierelement 50 unterscheidet sich durch einen Montagezapfen 71 von dem in den Figuren 4a bis 4c gezeigten Positionierelement 50, der an der Anlagefläche 52 des Positionierelementes 50 mittig angeordnet ist. Zur Aufnahme des Montagezapfens 71 ist in dem Schneidmesser 40 ein zentrales Loch 72 eingebracht. Das Positionierelement 50 sitzt mit seinem Montagezapfen 71 in dem Loch 72, wobei in den Figuren 5a bis 5c das Spiel des Montagezapfens 71 in dem Loch 72 etwas übertrieben dargestellt ist. Hierdurch soll zum Ausdruck gebracht werden, daß diese Art der Steckverbindung im Vergleich zu dem spielfreien Ineinandergreifen des Positionierelementes und der Positionierausnehmung ein Spiel aufweist. Durch das Vorsehen des Spiels kann das Positionierelement 50 am Schneidmesser 40 in einem gewissen Bereich positioniert werden. Das Schneidmesser 40 kann daher werksseitig vermessen und einjustiert werden. Im übrigen ist das Einbringen eines exakten Loches in das aus Hart- bzw. Sintermetall bestehende Messer nur mit erheblichem Aufwand möglich.

Das Positionierelement 50 kann auch einteilig mit dem Schneidmesser 40 ausgebildet sein. Eine solche einteilige Ausbildung kann beispielsweise aus Sintermetall hergestellt werden.

Das Positionierelement kann aus beliebigen, insbesondere relativ weichen, vorzugsweise elastischen und verformbaren (duktilen) Materialien, wie z.B. Kunststoff, Holz oder NE-Metallen und Legierungen, wie z.B. Kupfer, Messing bestehen.

Durch die erfindungsgemäße Ausgestaltung des Messers ist die Positionierkante 44 nicht notwendig und kann entfallen.

Erfindungsgemäß kann bei beliebigen Werkzeugeinheiten, die Kontaktflächen aufweisen ein entsprechendes Positionierelement mit einer entsprechenden Ausnehmung vorgesehen werden. Das Positionierelement kann aus einem relativ weichen Material ausgebildet sein, so daß es keine Haltekräfte während des Betriebs übernehmen kann.

Es können auch Fräseinheiten mit mehr als zwei Werkzeugträgern erfindungsgemäß ausgestaltet werden, wobei vorzugsweise an allen Kontaktflächen zwischen den Werkzeugträgern ein Positionierelement bzw. eine korrespondierende Ausnehmung vorgesehen wird.

## Patentansprüche

1. Werkzeugeinheit mit einem Primär- und Sekundärteil (2, 3; 31, 40), die sich in ihren Kontaktflächen (15, 16; 38, 48) berühren und unter Druck zusammensetzbar und verbindbar sind, wobei an der Kontaktfläche (15, 16; 38, 48) des Primärteils (2; 40) ein Positionierelement (17; 50) befestigt oder ausgebildet und in der Kontaktfläche (15, 16; 38, 40) des Sekundärteils (3; 31) eine korrespondierende Ausnehmung (18, 41) eingebracht ist, wobei das Positionierelement (17; 50) in die Positionierausnehmungn (18; 41) formschlüssig und spielfrei eingreift.

2. Werkzeugeinheit nach Anspruch 1,
**dadurch gekennzeichnet,**
daß das Positionierelement (17; 50) aus einem separaten Körper und aus einem im Vergleich zu Hartmetall relativ weichem Material, wie z.B. Kunststoff oder Holz, ausgebildet ist.

3. Werkzeugeinheit nach Anspruch 1 und/oder 2,
**dadurch gekennzeichnet,**
daß das Positionierelement aus einem elastischen Material ausgebildet ist.

4. Werkzeugeinheit nach Anspruch 1 und/oder 2,
**dadurch gekennzeichnet,**
daß das Positionierelement aus einem verformbaren und elastischen (duktilen) Material ausgebildet ist.

5. Werkzeugeinheit nach einem oder mehreren der Ansprüche 1 bis 4,
**dadurch gekennzeichnet,**
daß das Positionierelement (17; 50) an der Kontaktfläche (15; 48) des Primärteils mit Spiel anordbar und in einer bestimmten Stellung befestigbar ist.

6. Werkzeugeinheit nach einem oder mehreren der Ansprüche 1 bis 5,
**dadurch gekennzeichnet,**
daß das Positionierelement (17; 50) an der Kontaktfläche (15; 48) des Primärteils (2; 40) mittels einer Klebeverbindung befestigt ist.

7. Werkzeugeinheit nach einem oder mehreren der Ansprüche 1 bis 6,
**dadurch gekennzeichnet,**
daß das Positionierelement (17; 50) mit einer ebenflächigen Anlagefläche an der Kontaktfläche (15; 48) des Primärteils (2; 40) angeordnet ist.

8. Werkzeugeinheit nach Anspruch 1,
**dadurch gekennzeichnet,**
daß das Positionierelement (17;50) aus einem harten Material, wie z.B. Stahl, Sintermetall, Hartmetall, und insbesondere einstückig mit dem Primärteil (2;40) ausgebildet ist.

9. Werkzeugeinheit nach einem oder mehreren der Ansprüche 1 bis 8,
**dadurch gekennzeichnet,**
daß das Positionierelement (17; 50) und die korrespondierende Positionierausnehmung (18; 41) eine dom- bzw. dachförmige Kontur aufweisen.

10. Werkzeugeinheit nach einem oder mehreren der Ansprüche 1 bis 9,
**dadurch gekennzeichnet,**
daß die Werkzeugeinheit eine Fräseinheit (1) ist und die beiden verbindbaren Teile scheibenförmige Werkzeugträger (2, 3) sind.

11. Werkzeugeinheit nach einem oder mehreren der Ansprüche 1 bis 10,
**dadurch gekennzeichnet,**
daß das Positionierelement (18) aus zwei getrennten, z.B. zigarrenförmigen bzw. etwa ellipsoidförmigen Positionierkörpern (17a, 17b) ausgebildet ist, und die Positionierausnehmung (18) aus zwei entsprechenden Positionierausnehmungen (18a, 18b) ausgebildet ist.

12. Werkzeugeinheit nach Anspruch 11,
**dadurch gekennzeichnet,**
daß einer der beiden Positionierkörper (17a) in radialer Richtung und der andere Positionierkorper (17b) in Tangentialrichtung der Werkzeugeinheit angeordnet ist.

13. Werkzeugeinheit nach einem oder mehreren der Ansprüche 1 bis 12,
**dadurch gekennzeichnet,**
daß das Positionierelement aus Kunststoff, NE-Metall, einer Legierung oder Holz ausgebildet ist.

14. Werkzeugeinheit nach einem der Ansprüche 1 bis 9,
**dadurch gekennzeichnet,**
daß die Werkzeugeinheit ein Messerkopf mit mindestens einem Werkzeugtrager (Sekundärteil) und wenigstens einem plattenförmigen Messer (Primärteil) oder dergleichen, insbesondere Wendemesser oder Einwegmesser, ist, das an einer ebenen Spannfläche (38) einer nutförmigen Aussparung (34) anliegt, die am Umfang (32) des Werkzeugträgers (30) offen ist, und durch eine Klemmvorrichtung kraftschlüssig gegen die Spannfläche (38) lösbar gespannt ist.

15. Werkzeugeinheit nach Anspruch 14,
**dadurch gekennzeichnet,**
daß das Positionierelement (50) mehrteilig ausgebildet ist.

16. Werkzeugeinheit nach Anspruch 14 oder 15,
**dadurch gekennzeichnet,**
daß das Positionierelement (50) eine für das Messer (40) charakteristische Farbe aufweist.

17. Werkzeugeinheit nach einem oder mehreren der Ansprüche 14 bis 16,
**dadurch gekennzeichnet,**
daß das Positionierelement (50) aus zwei sich kreuzenden Stegen (51a, 51b) ausgebildet ist.

18. Werkzeugeinheit nach Anspruch 17,
**dadurch gekennzeichnet,**
daß sich die Stege (51a, 51b) des Positionierelements (50) in einem rechten Winkel kreuzen.

19. Werkzeugeinheit nach Anspruch 17 und/oder 18,
**dadurch gekennzeichnet,**
daß die Stege (51a, 51b) des Positionierelements (50) einen halbkreisförmigen Querschnitt aufweisen.

20. Werkzeugeinheit nach Anspruch 17 und/oder 18,
**dadurch gekennzeichnet,**
daß die Stege (51a, 51b) des Positionierelements (50) einen dreieckförmigen oder trapezförmigen Querschnitt mit seitlich abfallenden Flanken (53a, 53b) aufweisen.

21. Werkzeugeinheit nach einem oder mehreren der Ansprüche 17 bis 20,
**dadurch gekennzeichnet,**
daß einer der beiden Stege am Messer vertikal ausgerichtet ist und dieser vertikal ausgerichtete Steg an seinen Enden jeweils eine Anlaufschräge aufweist.

22. Werkzeugeinheit nach einem oder mehreren der Ansprüche 14 bis 21,
**dadurch gekennzeichnet,**
daß die Klemmvorrichtung einen Klemmbacken (55) und eine Klemmschraube (56) aufweist, wobei der Klemmbacken (55) entsprechend einer vorderen und hinteren Seitenfläche (35) der Aussparung (34) keilig bzw. konisch ausgebildet ist.

23. Werkzeugeinheit nach Anspruch 22,
**dadurch gekennzeichnet**,
daß die Klemmschraube (56) eine Links-Rechts-Schraube ist und sich mit ihrer Mittelachse (58) etwa parallel zur vorderen Seitenfläche (35) der Aussparung (34) erstreckt und mit einem Ende in eine im Grund (59) der Aussparung (34) befindlichen Gewindebohrung (61) und mit dem anderen Ende in ein Innengewinde des Klemmbackens (55) einfaßt.

24. Messer für einen Messerkopf, insbesondere nach einem der Ansprüche 14 bis 23, mit mindestens einem Werkzeugträger, wobei das Messer plättchenförmig, insbesondere als ebene Spannfläche (38) einer nutförmigen Aussparung (34) anliegt, die am Umfang (32) des Werkzeugträgers offen ist, und durch eine Klemmvorrichtung kraftschlüssig gegen die Spannfläche (38) lösbar gespannt ist, wobei
an dem ebenflächigen Messer (40) ein Positionierelement (50) befestigt oder ausgebildet ist, wobei das Positionierelement (50) eine räumlich vorstehende Kontur aufweist, für eine an der Spannfläche (38) zum Positionierelement (58) korrespondierende Positionierausnehmung (41), wobei das Positionierelement (50) aus einem relativ weichen Material ausgebildet ist und das Positionierelement (50) und die Positionierausnehmung (41) spielfrei ineinander passen, so daß das Messer (40) bezüglich seiner radialen und axialen Position als auch seiner Winkelstellung eindeutig am Werkzeugträger festlegbar ist.

25. Verfahren zum Kalibrieren einer Werkzeugeinheit nach einem oder mehreren der Ansprüche 14 bis 23,
**dadurch gekennzeichnet,**
daß ein Schneidmesser (40) vermessen wird,
ein Positionierelement (50) in einem durch die Messung vorbestimmten Abstand bzw. in einer vorbestimmten Anordnung zu einer Schneidkante (45a) auf dem Schneidmesser (40) befestigt wird, so daß die Schneidkante (45a) am Werkzeugträger zur Gewährleistung einer vorbestimmten Schnittiefe bzw. einem vorbestimmten Schnittwinkel exakt festgelegt ist.
